# EUROPEAN PATENT APPLICATION

(11) **EP 4 835 160 A1**
(43) Date of publication of application: **04.11.2026**
(21) Application number: 24913042.8
(22) Date of filing: 26.12.2024
(51) Int. Cl.: C25B 13/08, C25B 1/04, C25B 3/03, C25B 3/25, C25B 9/00, C25B 9/23, H01B 1/06

(54) **SOLID POLYMER ELECTROLYTE MEMBRANE, MEMBRANE-ELECTRODE ASSEMBLY, WATER ELECTROLYSIS DEVICE, METHOD FOR PRODUCING HYDROGEN, AND METHOD FOR PRODUCING SOLID POLYMER ELECTROLYTE MEMBRANE**

(30) Priority: 27.12.2023 JP 2023221084
(71) Applicant: AGC Inc., Chiyoda-ku Tokyo 100-8405 (JP)
(72) Inventor: HAYABE, Shintaro, Tokyo 100-8405 (JP); SUMIKURA, Kosuke, Tokyo 100-8405 (JP); SAWADA, Toshiaki, Tokyo 100-8405 (JP); KOMATSU, Ken, Tokyo 100-8405 (JP)
(74) Representative: Müller-Boré & Partner Patentanwälte PartG mbB
(86) International application number: PCT/JP2024/046243
(87) International publication number: WO 2025/143156

(57) **Abstract**

To provide a polymer electrolyte membrane which is less likely to be torn and which is less likely to have pinholes when applied to a water electrolyzer. A polymer electrolyte membrane comprising a fluorinated polymer having ion exchange groups, and a woven fabric constituted by warp yarns and weft yarns, wherein the standard deviation of the areas of regions compartmentalized by the warp yarns and the weft yarns, is 0.10×10⁴ to 2.0×10⁴ µm², as observed from a normal direction to the surface of the polymer electrolyte membrane.

## Description

### TECHNICAL FIELD

The present disclosure relates to a polymer electrolyte membrane, a membrane electrode assembly, a water electrolyzer, a hydrogen production method and a polymer electrolyte membrane production method.

### BACKGROUND ART

Polymer electrolyte membranes are suitable for various applications, and various studies have been made. For example, a membrane electrode assembly which has an anode containing a catalyst layer, a polymer electrolyte membrane and a cathode containing a catalyst layer, arranged in this order, is applicable to a polymer electrolyte membrane water electrolyzer, etc.

In a polymer electrolyte membrane water electrolyzer, electrolysis is conducted while water is supplied to the membrane electrode assembly from the anode side, and thus the polymer electrolyte membrane may contain a woven fabric for the purpose of improving mechanical strength, etc. For example, Patent Document 1 discloses that a woven fabric is used as a support material for the polymer electrolyte membrane and that the water contact angle of the support material is adjusted.

### PRIOR ART DOCUMENTS

### PATENT DOCUMENTS

Patent Document 1: JP-A-2000-195333

### DISCLOSURE OF INVENTION

### TECHNICAL PROBLEM

The present inventors have found that when a polymer electrolyte membrane is applied to a polymer electrolyte membrane water electrolyzer (hereinafter also referred to simply as "water electrolyzer"), pinholes may sometimes be formed.

Further, the present inventors have conducted studies on the polymer electrolyte membrane disclosed in Patent Document 1 and as a result found that the polymer electrolyte membrane may sometimes be easily torn.

The present disclosure has been made under these circumstances, and according to an embodiment of the present invention, the object is to provide a polymer electrolyte membrane which is less likely to be torn and which is less likely to have pinholes when applied to a water electrolyzer.

Further, according to an embodiment of the present invention, another object is to provide a membrane electrode assembly, a water electrolyzer, a hydrogen production method and a polymer electrolyte membrane production method.

### SOLUTION TO PROBLEM

The present invention has the following configurations.
[1] A polymer electrolyte membrane comprising a fluorinated polymer having ion exchange groups, and a woven fabric constituted by warp yarns and weft yarns,
   wherein the standard deviation of the areas of regions compartmentalized by the warp yarns and the weft yarns, is 0.10×10⁴ to 2.0×10⁴ µm², as observed from a normal direction to the surface of the polymer electrolyte membrane.
[2] The polymer electrolyte membrane according to [1], wherein the denier count of the warp yarns and the denier count of the weft yarns are each independently 15 to 50.
[3] The polymer electrolyte membrane according to [1] or [2], wherein the average value of the areas of the regions compartmentalized by the warp yarns and the weft yarns is 1.0×10⁴ to 10.0×10⁴ µm².
[4] The polymer electrolyte membrane according to any one of [1] to [3], wherein the standard deviation of the areas of the regions compartmentalized by the warp yarns and the weft yarns is 0.30×10⁴ to 1.0×10⁴ µm².
[5] The polymer electrolyte membrane according to any one of [1] to [4], wherein the density of the warp yarns and the density of the weft yarns are each independently 70 to 150 yarns/inch.
[6] The polymer electrolyte membrane according to any one of [1] to [5], wherein the warp yarns and the weft yarns are each independently made of a material selected from the group consisting of a polytetrafluoroethylene, a tetrafluoroethylene/perfluoroalkyl vinyl ether copolymer, a polyether ether ketone and a polyphenylene sulfide.
[7] The polymer electrolyte membrane according to any one of [1] to [6], wherein the ion exchange groups are sulfonic acid functional groups.
[8] The polymer electrolyte membrane according to any one of [1] to [7], wherein the ion exchange capacity of the fluorinated polymer is 0.90 to 2.00 meq/g dry resin.
[9] The polymer electrolyte membrane according to any one of [1] to [8], wherein the fluorinated polymer has units based on a fluorinated olefin and units having a sulfonic acid functional group and a fluorine atom.
[10] The polymer electrolyte membrane according to [9], wherein the fluorinated olefin is a C₂₋₃ fluoroolefin having one or more fluorine atoms in its molecule.
[11] The polymer electrolyte membrane according to [9] or [10], wherein the units having a sulfonic acid functional group and a fluorine atom are units represented by the formula (1):

   formula (1) -[CF₂-CF(-L-(SO₃M)ₙ)]-

   wherein L is a (n+1)-valent perfluorohydrocarbon group which may contain an etheric oxygen atom, M is a hydrogen atom, an alkali metal or a quaternary ammonium cation, n is 1 or 2, and the plurality of M may be the same or different.
[12] A membrane electrode assembly for a water electrolyzer, which comprises an anode having a catalyst layer, a cathode having a catalyst layer, and the polymer electrolyte membrane as defined in any one of [1] to [11] provided between the anode and the cathode.
[13] A water electrolyzer, which comprises the membrane electrode assembly as defined in [12].
[14] A hydrogen production method, which comprises electrolyzing water by the water electrolyzer as defined in [13] to produce hydrogen.
[15] A method for producing the polymer electrolyte membrane as defined in any one of [1] to [11], which comprises thermally press-bonding a laminate containing the following (a), (b) and (c) in this order, (b) and (c) being in contact with each other, by a thermal press-bonding apparatus pre-heated at the thermal press-bonding temperature for 30 to 600 seconds, peeling the (a) to obtain a precursor membrane, and converting groups convertible to ion exchange groups in the precursor membrane to ion exchange groups to obtain the polymer electrolyte membrane:
   (a) a base material of which the difference between the maximum membrane thickness and the minimum membrane thickness is 5 to 30 µm;
   (b) a film made of a fluorinated polymer having groups convertible to ion exchange groups; and
   (c) a woven fabric constituted by warp yarns and weft yarns.

### ADVANTAGEOUS EFFECTS OF INVENTION

According to an embodiment of the present invention, a polymer electrolyte membrane which is less likely to be torn and which is less likely to have pinholes when applied to a water electrolyzer can be provided.

Further, according to an embodiment of the present invention, a membrane electrode assembly, a water electrolyzer, an electrolytic hydrogenation apparatus, a hydrogen production method and a polymer electrolyte membrane production method can be provided.

### BRIEF DESCRIPTION OF DRAWINGS

Fig. 1 is a plan view illustrating a polymer electrolyte membrane of the present disclosure as observed from a normal direction to its surface.
Fig. 2 is a cross-sectional view illustrating the polymer electrolyte membrane shown in Fig. 1 at line B-B'.
Fig. 3 is a diagram illustrating a way to obtain the area of a region compartmentalized by warp yarns and weft yarns.
Fig. 4 is a cross-sectional view schematically illustrating a membrane electrode assembly of the present disclosure.

### DESCRIPTION OF EMBODIMENTS

The following definitions of terms apply throughout the present specification and claims unless otherwise specified.

An "ion exchange group" refers to a group containing at least one ion exchangeable for a different ion, such as the following sulfonic acid functional group and carboxylic acid functional group.

A "sulfonic acid functional group" refers to a sulfonic acid group (-SO₃H) or a sulfonate group. The sulfonate group may be, for example, (-SO₃⁻)Ma⁺, (-SO₃⁻)₂Mb²⁺ or (-SO₃⁻)₃Mc³⁺ (where Ma⁺ is an alkali metal ion or a quaternary ammonium cation; Mb²⁺ is a divalent metal ion; Mc³⁺ is a trivalent metal ion). When there are two ligands, the number of ion exchange groups is counted as 2, and when there are three ligands, the number of ion exchange groups is counted as 3.

A "carboxylic acid functional group" refers to a carboxylic acid group (-COOH) or a carboxylate group. The carboxylate group may be, for example, (-COO⁻)Ma⁺, (-COO⁻ )₂Mb²⁺ or (-COO⁻)₃Mc³⁺ (where Ma⁺ is an alkali metal ion or a quaternary ammonium cation; Mb²⁺ is a divalent metal ion; and Mc³⁺ is a trivalent metal ion). When there are two ligands, the number of ion exchange groups is counted as 2, and when there are three ligands, the number of ion exchange groups is counted as 3.

A "precursor membrane" refers to a membrane containing a polymer having groups convertible to ion exchange groups.

A "group convertible to an ion exchange group" refers to a group that can be converted to an ion exchange group by treatments such as hydrolysis and conversion to acid form.

A "group convertible to a sulfonic acid functional group" refers to a group that can be converted to a sulfonic acid functional group by treatments such as hydrolysis and conversion to acid form.

A "group convertible to a carboxylic acid functional group" refers to a group that can be converted to a carboxylic acid functional group by known treatments such as hydrolysis and conversion to acid form.

A "unit" in a polymer refers to an atomic group derived from a single monomer molecule, which is formed by polymerization reaction of the monomer, and is also called a unit based on a monomer. A unit based on a monomer may be an atomic group formed directly by polymerization of the monomer or may be an atomic group formed by polymerization of the monomer followed by modification to a partially different structure.

A numerical range expressed using "to" means a range including numerical values described before and after "to" as the lower and upper limits. In a series of numerical ranges described in the present specification, the upper limit or lower limit of a numerical range may be replaced by the upper limit or lower limit of another numerical range in the same series. The upper limit or lower limit of any numerical range described in the present specification may be replaced by any of numerical values indicated in Examples.

### <Polymer electrolyte membrane>

The polymer electrolyte membrane of the present disclosure (hereinafter also referred to simply as "electrolyte membrane") comprises a fluorinated polymer having ion exchange groups (hereinafter also referred to as "fluorinated polymer (I)"), and a woven fabric constituted by warp yarns and weft yarns.

Here, the standard deviation of the areas of regions compartmentalized by warp yarns and weft yarns, is 0.10×10⁴ to 2.0×10⁴ µm², as observed from a normal direction to the surface of the polymer electrolyte membrane.

The regions compartmentalized by the warp yarns and the weft yarns will be described with reference to drawings.

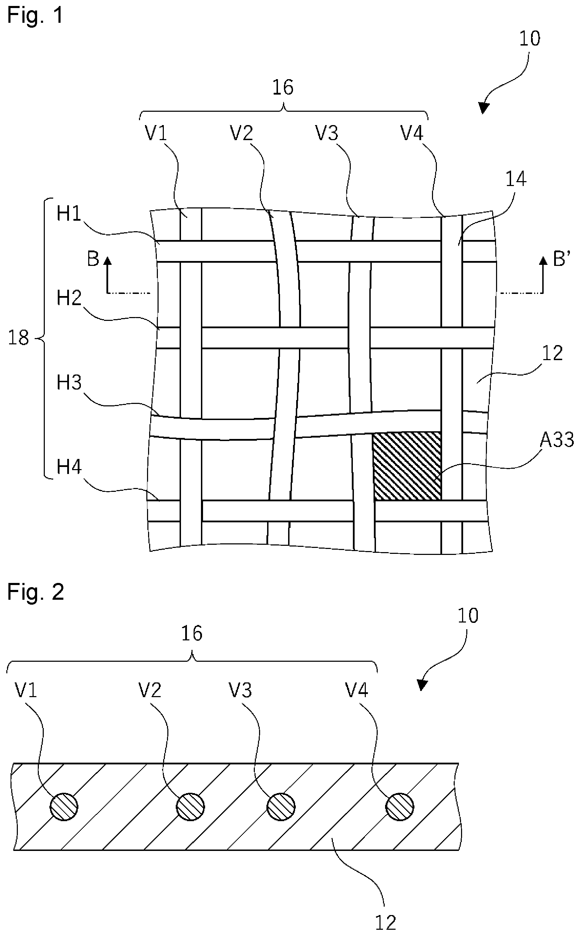

Fig. 1 is a plan view illustrating a polymer electrolyte membrane 10 of the present disclosure (hereinafter also referred to simply as "electrolyte membrane 10") as observed from a normal direction to its surface. Fig. 1 shows a part of the electrolyte membrane 10.

The electrolyte membrane 10 has an electrolyte 12 that contains the fluorinated polymer (I) and a woven fabric 14 constituted by warp yarns 16 and weft yarns 18. The woven fabric 14 is a plain weave. In Fig. 1, warp yarns V1 to V4 and weft yarns H1 to H4 are shown.

Fig. 2 is a cross-sectional view illustrating the electrolyte membrane 10 shown in Fig. 1 at line B-B'. As shown in Fig. 2, the warp yarns 16 (that is the woven fabric 14) are arranged in the electrolyte 12.

A region A33 shown in Fig. 1 is a region compartmentalized by the warp yarn V3, the warp yarn V4, the weft yarn H3 and the weft yarn H4. The region A33 is, as shown in Fig. 1, a region surrounded by the warp yarn V3, the warp yarn V4, the weft yarn H3 and the weft yarn H4, where the warp yarn V3, the warp yarn V4, the weft yarn H3 and the weft yarn H4 are not present, when the electrolyte membrane 10 is observed from a normal direction to the surface of the electrolyte membrane 10.

The electrolyte membrane 10 has regions each compartmentalized by adjacent warp yarns 16 and adjacent weft yarns 18, such as the region A33. In the present disclosure, the standard deviation of the areas of the regions is 0.10×10⁴ to 2.0×10⁴ µm². A method for calculating the standard deviation will be described in detail below.

The mechanism as to why the electrolyte membrane is less likely to be torn and is less likely to have pinholes when applied to a water electrolyzer, with the standard deviation of the areas of the regions is within the above range, is not clearly understood yet, however, the present inventors estimate as follows.

The standard deviation of the areas of the regions being equal to or more than the lower limit value of the above range indicates a certain level or more of variation in the areas of the regions compartmentalized by the warp yarns and the weft yarns. That seems to suggest that there is a part not linear in at least a part of one of the warp yarns and the weft yarns, and there is a part where the regions are not linearly arranged. When the polymer electrolyte membrane has a tear, propagation of the tear is considered to linearly proceed among the regions. If there is a part where the regions are not linearly arranged, the propagation of the tear is likely to stop at that part and as a result, the electrolyte membrane becomes less likely to be torn.

Further, the standard deviation of the areas of the regions being equal to or less than the upper limit value of the above range indicates a certain level or less of variation in the areas of the regions. If the variation in the areas is too large, regions compartmentalized by the warp yarns and the weft yarns, larger than other surrounding regions, tend to be present. At such regions, the binding force of the woven fabric tends to be weak, swelling of the electrolyte membrane during water electrolysis tends to be significant, and this portion tends to expand. It is considered that if such expansion occurs, the expanded electrolyte membrane may be brought into contact with other members in the water electrolyzer and as a result, pinholes (perforations of the membrane) are likely to form.

Now, the electrolyte membrane of the present disclosure (hereinafter also referred to simply as "electrolyte membrane") will be described below.

### [Fluorinated polymer (I)]

The electrolyte contains the fluorinated polymer (I). That is, the electrolyte membrane contains the fluorinated polymer (I).

The ion exchange capacity of the fluorinated polymer (I) is preferably 0.90 meq/g dry resin or more, more preferably more than 1.10 meq/g dry resin, further preferably 1.15 meq/g dry resin or more, particularly preferably 1.20 meq/g dry resin or more, most preferably 1.25 meq/g dry resin or more, with a view to achieving a lower electrolysis voltage when the electrolyte membrane is applied to a water electrolyzer.

The upper limit value of the ion exchange capacity of the fluorinated polymer (I) is preferably 2.00 meq/g dry resin or less, more preferably 1.50 meq/g dry resin or less, particularly preferably 1.43 meq/g dry resin or less.

Single type of the fluorinated polymer (I) for the electrolyte membrane may be used or a laminate or mixture of two or more types may be used.

Although the electrolyte membrane may contain a polymer other than the fluorinated polymer (I), it is preferred that the polymer in the electrolyte membrane is substantially composed of the fluorinated polymer (I). Here, the expression "substantially composed of the fluorinated polymer (I)" means that the content of the fluorinated polymer (I) is 95 mass% or more to the total mass of the polymer in the electrolyte membrane. The upper limit of the content of the fluorinated polymer (I) is 100 mass% to the total mass of the polymer in the electrolyte membrane.

As examples of the polymer other than the fluorinated polymer (I), there may be mentioned one or more types of polyazole compounds selected from the group consisting of polymers of heterocyclic compounds each containing one or more nitrogen atoms in the ring and polymers of heterocyclic compounds each containing one or more nitrogen atoms and oxygen and/or sulfur atoms in the ring.

Specific examples of the polyazole compounds include polyimidazole compounds, polybenzimidazole compounds, polybenzobisimidazole compounds, polybenzoxazole compounds, polyoxazole compounds, polythiazole compounds and polybenzothiazole compounds.

In consideration of the oxidation resistance of the electrolyte membrane, a polyphenylene sulfide resin and a polyphenylene ether resin may also be mentioned as specific examples of the other polymer.

The fluorinated polymer (I) has ion exchange groups. Specific examples of the ion exchange groups include sulfonic acid functional groups and carboxylic acid functional groups. Sulfonic acid functional groups are preferred to achieve a lower electrolysis voltage.

In the following, embodiments of a fluorinated polymer having sulfonic acid functional groups (hereinafter also referred to as "fluorinated polymer (S)") will be discussed mainly.

The fluorinated polymer (S) preferably contains units based on a fluorinated olefin and units having a sulfonic acid functional group and a fluorine atom.

The fluorinated olefin may be, for example, a C₂₋₃ fluoroolefin having one or more fluorine atoms in the molecule. Specific examples of the fluoroolefin include tetrafluoroethylene (hereinafter also referred to as "TFE"), chlorotrifluoroethylene, vinylidene fluoride, vinyl fluoride and hexafluoropropylene. Among others, TFE is preferred in terms of the monomer production cost, the reactivity with other monomers and the ability to give the fluorinated polymer (S) with excellent properties.

Single type of the fluorinated olefin may be used or two or more types may be used in combination.

The units having a sulfonic acid functional group and a fluorine atom are preferably units represented by the formula (1).

Formula (1) -[CF₂-CF(-L-(SO₃M)ₙ)]-

Here, L is a (n+1)-valent perfluorohydrocarbon group which may contain an etheric oxygen atom.

The etheric oxygen atom may be located at a terminal end or may be located between carbon atoms of the perfluorohydrocarbon group.

The number of carbon atoms in the (n+1)-valent perfluorohydrocarbon group is preferably 1 or more, particularly preferably 2 or more, and is preferably 20 or less, particularly preferably 10 or less.

As L, preferred is a (n+1)-valent perfluoroaliphatic hydrocarbon group which may contain an etheric oxygen atom. Particularly preferred is a divalent perfluoroalkylene group which may contain an etheric oxygen atom as corresponding to an embodiment of n = 1, or a trivalent perfluoroaliphatic hydrocarbon group which may contain an etheric oxygen atom as corresponding to an embodiment of n = 2.

The divalent perfluoroalkylene group may be linear or branched.

M is a hydrogen atom, an alkali metal or a quaternary ammonium cation. The plurality of M may be the same or different.

n is 1 or 2.

As the units represented by the formula (1), units represented by the formula (1-1), units represented by the formula (1-2), units represented by the formula (1-3) or units represented by the formula (1-4) are preferred.

Formula (1-1) -[CF₂-CF(-O-R^{f1}-SO₃M)]-

Formula (1-2) -[CF₂-CF(-R^{f1}-SO₃M)]-

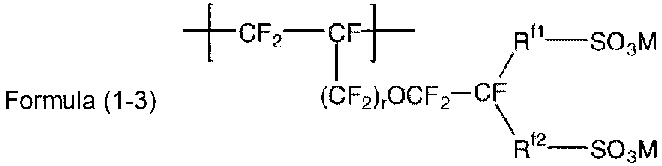

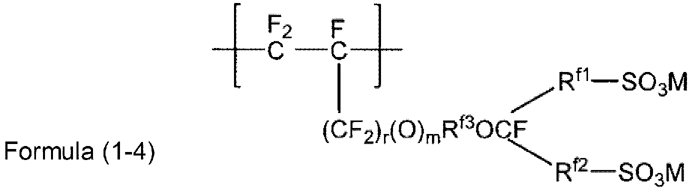

Here, R^{f1} is a perfluoroalkylene group which may contain an oxygen atom between carbon atoms. The number of carbon atoms in the perfluoroalkylene group is preferably 1 or more, particularly preferably 2 or more, and is preferably 20 or less, particularly preferably 10 or less.

R^{f2} is a single bond or a perfluoroalkylene group which may contain an oxygen atom between carbon atoms. The number of carbon atoms in the perfluoroalkylene group is preferably 1 or more, particularly preferably 2 or more, and is preferably 20 or less, particularly preferably 10 or less.

R^{f3} is a single bond or a perfluoroalkylene group which may contain an oxygen atom between carbon atoms. The number of carbon atoms in the perfluoroalkylene group is preferably 1 or more, particularly preferably 2 or more, and is preferably 20 or less, particularly preferably 10 or less.

r is 0 or 1.

m is 0 or 1.

M is as defined above.

As the units represented by the formula (1-1) and the units represented by the formula (1-2), units represented by the formula (1-5) are more preferred.

Formula (1-5) -[CF₂-CF(-(CF₂)ₓ-(OCF₂CFY)_{y}-O-(CF₂)_{z}-SO₃M)]-

Here, x is 0 or 1, y is an integer of 0 to 2, z is an integer of 1 to 4, Y is F or CF₃, and M is as defined above.

Specific examples of the units represented by the formula (1-1) include the following units. In the formulae, w is an integer of 1 to 8, x is an integer of 1 to 5, and M is as defined above.

-[CF₂-CF(-O-(CF₂)_{w}-SO₃M)]-

-[CF₂-CF(-O-CF₂CF(CF₃)-O-(CF₂)_{w}-SO₃M)]-

-[CF₂-CF(-(O-CF₂CF(CF₃))ₓ-SO₃M)]-

Specific examples of the units represented by the formula (1-2) include the following units. In the formulae, w is an integer of 1 to 8, and M is as defined above.

-[CF₂-CF(-(CF₂)_{w}-SO₃M)]-

-[CF₂-CF(-CF₂-O-(CF₂)_{w}-SO₃M)]-

As the units represented by the formula (1-3), preferred are units represented by the formula (1-3-1). In the formulae, M is as defined above.

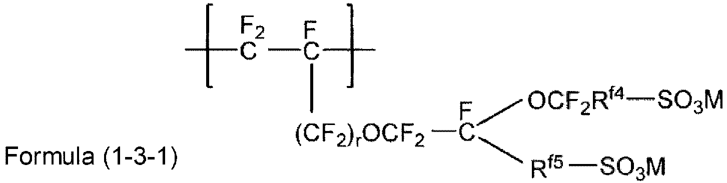

R^{f4} is a C₁₋₆ linear perfluoroalkylene group, and R^{f5} is a single bond or a C₁₋₆ linear perfluoroalkylene group which may contain an oxygen atom between carbon atoms. r and M are as defined above.

Specific examples of the units represented by the formula (1-3-1) include the following units.

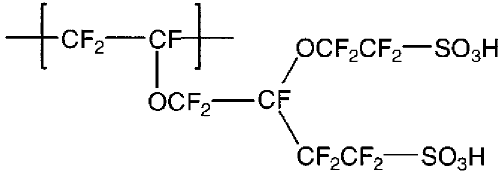

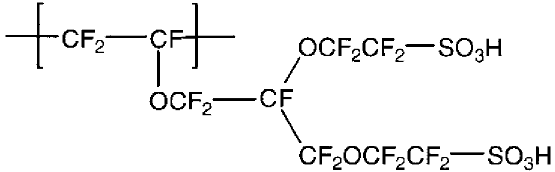

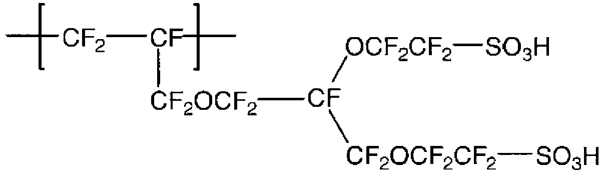

As the units represented by the formula (1-4), preferred are units represented by the formula (1-4-1). In the formulae, R^{f1}, R^{f2} and M are as defined above.

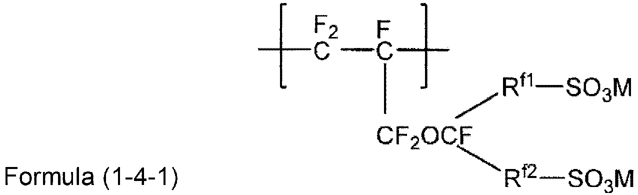

Specific examples of the units represented by the formula (1-4-1) include the following units.

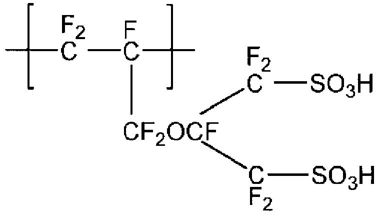

Single type of the units having a sulfonic acid functional group and a fluorine atom may be used or two or more types may be used in combination.

The fluorinated polymer (I) may contain, in addition to the units based on the fluorinated olefin and the units having a sulfonic acid functional group and a fluorine atom, units based on other monomers.

Specific examples of the other monomer include CF₂=CFR^{f6} (where R^{f6} is a C₂₋₁₀ perfluoroalkyl group), CF₂=CF-OR^{f7} (where R^{f7} is a C₁₋₁₀ perfluoroalkyl group) and CF₂=CFO(CF₂)_{y}CF=CF₂ (where v is an integer of 1 to 3).

The content of the units based on the other monomer is preferably 30 mass% or less to all units in the fluorinated polymer (I) to ensure a certain level of ion exchange performance.

The electrolyte membrane may have a single-layer structure or a multilayer structure. In a case where the electrolyte membrane has a multilayer structure, an embodiment may be mentioned in which a plurality of layers containing the fluorinated polymer (I), differing in the ion exchange capacity, are stacked.

### [Woven fabric]

The electrolyte membrane contains a woven fabric constituted by warp yarns and weft yarns.

The denier count of the warp yarns and the denier count of the weft yarns, constituting the woven fabric, are each independently preferably 2 or more. With a view to achieving higher strength and dimensional stability of the electrolyte membrane, they are more preferably 10 or more, further preferably 15 or more.

The upper limit values of the denier count of the warp yarns and the denier count of the weft yarns, constituting the woven fabric, are each independently preferably 60 or less, more preferably 50 or less, particularly preferably 20 or less, with a view to achieving a lower electrolysis voltage when the electrolyte membrane is applied to a water electrolyzer.

Here, the denier count refers to a value that expresses the mass of 9,000 m of yarns in grams (g/9000 m).

With a view to achieving high strength and dimensional stability of the electrolyte membrane, the densities of the warp yarns and the weft yarns constituting the woven fabric are each independently preferably 50 yarns/inch or more, more preferably 70 yarns/inch or more, further preferably 90 yarns/inch or more, and with a view to achieving a lower electrolysis voltage when the electrolyte membrane is applied to a water electrolyzer, preferably 200 yarns/inch or less, more preferably 150 yarns/inch or less, particularly preferably 100 yarns/inch or less.

The warp yarns and the weft yarns can be each composed of either a monofilament consisting of one filament or a multifilament consisting of two or more filaments. Preferred is a monofilament.

The warp yarns and the weft yarns are each independently preferably made of a material selected from the group consisting of a polytetrafluoroethylene (hereinafter also referred to as "PTFE"), a tetrafluoroethylene/perfluoroalkyl vinyl ether copolymer (hereinafter also referred to as "PFA"), a polyether ether ketone (hereinafter also referred to as "PEEK") and a polyphenylene sulfide (hereinafter also referred to as "PPS") to achieve higher durability of the yarns.

The warp yarns and the weft yarns are preferably in the form of slit yarns to achieve higher durability and strength of the yarns.

In the woven fabric, the warp yarns and the weft yarns are preferably substantially orthogonal to each other (see Fig. 1). "Substantially orthogonal" means that the angle formed by a warp yarn and a weft yarn is 90±10 degrees.

Further, the weave structure in the woven fabric is not particularly limited, and the woven fabric may be, for example, plain weave, twill weave or satin weave, and is preferably plain weave.

In the case where the material constituting the woven fabric is PTFE, in view of good balance between strength and handleability of the electrolyte membrane, the fabric weight of the woven fabric is preferably 20 to 40 g/m², particularly preferably 30 to 40 g/m².

In the case where the material constituting the woven fabric is PFA, in view of good balance between strength and handleability of the electrolyte membrane, the fabric weight of the woven fabric is preferably 10 to 30 g/m², particularly preferably 10 to 20 g/m².

In the case where the material constituting the woven fabric is PEEK, in view of good balance between strength and handleability of the electrolyte membrane, the fabric weight of the woven fabric is preferably 5 to 40 g/m², particularly preferably 5 to 30 g/m².

In the case where the material constituting the woven fabric is PPS, in view of good balance between strength and handleability of the electrolyte membrane, the fabric weight of the woven fabric is preferably 5 to 40 g/m², particularly preferably 5 to 30 g/m².

The aperture ratio of the woven fabric is preferably 50% or higher, and with a view to achieving a lower electrolysis voltage when applied to a water electrolyzer, more preferably 55% or higher, further preferably 60% or higher, particularly preferably 70% or higher.

The upper limit value of the aperture ratio of the woven fabric is, with a view to achieving higher strength of the electrolyte membrane, preferably 90% or lower, particularly preferably 80% or lower.

The aperture ratio of the woven fabric is calculated by the following formula (ε) based on the average diameter R1 of yarns and the average spacing P1 (hereinafter also referred to as "pitch P1") between adjacent ones of yarns.

Here, the average diameter R1 of yarns is an arithmetic mean of diameter measurements of 10 different yarns arbitrarily selected on a magnified image of the electrolyte membrane (e.g. at a magnification of 100) taken by a microscope. Further, the pitch P1 is an arithmetic mean of measurements of 10 different spacings arbitrarily selected on a magnified image of the woven fabric surface (e.g. at a magnification of 100) taken by a microscope. $Aperture ratio \left(%\right) of woven fabric = {\left[P1/\left(P1+R1\right)\right]}^{2} \times 100$ (ε)

### [Area compartmentalized by warp yarns and weft yarns]

Of the electrolyte membrane of the present disclosure, the standard deviation of the areas of regions compartmentalized by the warp yarns and the weft yarns is 0.10×10⁴ to 2.0×10⁴ µm², as observed from a normal direction to the surface of the electrolyte membrane.

The standard deviation of the areas is obtained by the following procedure. The following procedure is considered assuming an embodiment in which the warp yarns and the weft yarns are substantially orthogonal to each other, however, the standard deviation can be approximated in the same manner also in an embodiment in which they are not substantially orthogonal to each other.

First, the electrolyte membrane is observed with an optical microscope from a normal direction to its surface, at a magnification of 5 to 10. The normal direction to the surface of the electrolyte membrane corresponds to the thickness direction of the electrolyte membrane.

Then, the area of each region compartmentalized by the warp yarns and the weft yarns (see the region A33 in Fig. 1) is measured, by the following method.

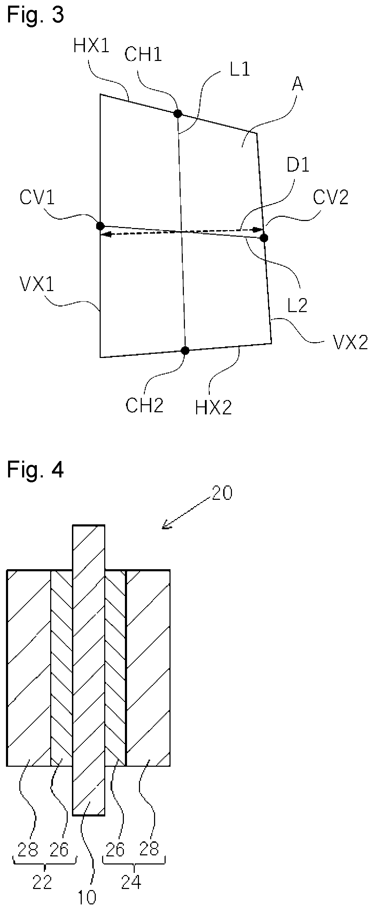

The method of measuring the area of the region will be described with reference to Fig. 3.

Fig. 3 illustrates only one region A compartmentalized by the warp yarns and the weft yarns.

In Fig. 3, a top side (side HX1) and a bottom side (side HX2) of the region A are sides of the region A defined by the weft yarns, and a left side (side VX1) and a right side (side VX2) of the region A are sides of the region A defined by the warp yarns.

In Fig. 3, a point CH1 represents a midpoint of the side HX1, a point CH2 a midpoint of the side HX2, a point CV1 a midpoint of the side VX1, and a point CV2 a midpoint of the side VX2.

A linear line segment L1 with endpoints CH1 and CH2, and a linear line segment L2 with endpoints CV1 and CV2, are drawn. The longer one between the line segments L1 and L2 (the line segment L1 in Fig. 3) is determined and its length is measured.

A width of the region A, which passes a midpoint of the above determined line segment (line segment L1), in a direction orthogonal to the determined line segment (the width D1 in Fig. 3), is measured.

In the present disclosure, the area of the region A is obtained as a product of the length of the determined line segment (line segment L1) and the width of the region A in a direction orthogonal to the determined line segment (width D1).

In a case where the line segment L2 is longer than the line segment L1, a width of the region A which passes a midpoint of the line segment L2, in a direction orthogonal to the line segment L2, is measured, and the area is obtained in the same manner as above.

The above area measurement is conducted on 30 points. If the number of measurement points does not reach 30 in the above field of view, measurement is continued in another field of view until 30 points are achieved.

From the obtained values of the areas of the regions, the average (unit: µm²) and the standard deviation (unit: µm²) are obtained. The average is an arithmetic mean.

The standard deviation of the areas obtained by the above procedure is 0.10×10⁴ to 2.0×10⁴ µm², and in that the electrolyte membrane is less likely to have pinholes when applied to a water electrolyzer, preferably 1.5×10⁴ µm² or less, more preferably 1.0×10⁴ µm² or less, further preferably 0.50×10⁴ µm² or less. The standard deviation of the areas is 0.15×10⁴ µm² or more, more preferably 0.20×10⁴ µm² or more, further preferably 0.30×10⁴ µm² or more, in that the electrolyte membrane is further less likely to be torn.

The average value of the areas obtained by the above procedure is, with a view to further decreasing the electrolysis voltage when applied to a water electrolyzer, preferably 1.0×10⁴ µm² or more, more preferably 3.0×10⁴ µm² or more. Further, with a view to further increasing the strength of the electrolyte membrane, it is preferably 10.0×10⁴ µm² or less, more preferably 7.0×10⁴ µm² or less.

### [Membrane thickness]

The membrane thickness of the electrolyte membrane of the present disclosure is preferably 20 µm or more, more preferably 40 µm or more, particularly preferably 70 µm or more.

The upper limit value of the electrolyte membrane is, with a view to further decreasing the electrolysis voltage when applied to a water electrolyzer, preferably 150 µm, more preferably 130 µm.

The membrane thickness of the electrolyte membrane is an arithmetic mean of 20 arbitrary points selected in an image of a cross section in a plane in parallel with the membrane thickness direction, observed with an optical microscope.

### [Electrolyte membrane production method]

As a method for producing the electrolyte membrane, the following method may be mentioned.

A laminate containing (a), (b) and (c) in this order, (b) and (c) being in contact with each other, is thermally press-bonded by a thermal press-bonding apparatus pre-heated at the thermal press-bonding temperature for 30 to 600 seconds, then the (a) is peeled to obtain a membrane containing the fluorinated polymer (I') and the woven fabric (hereinafter also referred to as "precursor membrane") and then the groups convertible to ion exchange groups in the precursor membrane are converted to ion exchange groups to obtain an electrolyte membrane.
(a) A base material of which the difference between the maximum membrane thickness and the minimum membrane thickness is 5 to 30 µm.
(b) A film made of a fluorinated polymer having groups convertible to ion exchange groups (hereinafter also referred to as "fluorinated polymer (I')").
(c) A woven fabric constituted by warp yarns and weft yarns.

A method may be mentioned in which a membrane containing a polymer of a fluorinated monomer having a group convertible to an ion exchange group (hereinafter also referred to as "fluorinated monomer (I')") (hereinafter this polymer will be also referred to as "fluorinated polymer (I')") and a woven fabric (hereinafter this membrane will be also referred to as "precursor membrane") is produced, and the groups convertible to ion exchange groups in the precursor membrane are converted to ion exchange groups.

As a preferred embodiment of the precursor membrane production method, a method may be mentioned which comprises sandwiching a laminate having the woven fabric and the fluorinated polymer (I') provided on both sides of the woven fabric, with transfer base materials such as films having a melting point of 70 to 180°C (hereinafter also referred to simply as "base materials") and thermally press-bonding the members.

Specific examples of the base material include a polyethylene film, a polypropylene film, a polystyrene film and a polyethylene terephthalate film. The base material may be a single-layer base material or a base material having a multilayer structure consisting of two or more layers. In a case where the base material has a multilayer structure, the respective layers may be layers made of the same material or may be layers made of different materials. Specific examples of the materials constituting the respective layers are as described above.

In the above preferred embodiment, in order that the standard deviation of the areas compartmentalized by the warp yarns and the weft yarns is likely to be within the above range and that the electrolyte membrane of the present disclosure is likely to be obtained, it is preferred to use a base material with a predetermined variation in the membrane thickness. Specifically, the difference between the maximum membrane thickness and the minimum membrane thickness of the base material measured by a contact membrane thickness meter, is preferably 5 to 30 µm, more preferably 5 to 20 µm, further preferably 5 to 10 µm.

Further, it is preferred that both the two base materials satisfy the above requirements.

The method of thermal press-bonding (hot pressing) is not particularly limited and may, for example, be flat pressing or roll pressing.

Further, in order that the standard deviation of the areas compartmentalized by the warp yarns and the weft yarns is likely to be adjusted to the above-described range, it is preferred to adjust the hot pressing conditions while the base material which satisfies the requirement of the difference between the maximum membrane thickness and the minimum membrane thickness is used. By hot pressing, for example, a laminate to be pressed, having a metal plate, a cushion sheet, the base material, the above laminate, the base material, a cushion sheet and a metal plate stacked in this order, is inserted between a pair of heaters and a force is applied to the pair of heaters to press the laminate to be pressed.

The adjustment of the hot pressing conditions may be, for example, adjustment of the pressing pressure, adjustment of the pressing time, adjustment of the pressing temperature, or adjustment of the pre-heating time. Particularly, in order that the standard deviation of the areas compartmentalized by the warp yarns and the weft yarns is more easily adjusted to be the above-described range, it is preferred to adjust the pre-heating time.

The pre-heating time refers to a holding time in a state where before the thermal press-bonding, no pressing pressure is applied and the heater and the metal plate are in contact with each other while the laminate to be pressed is inserted between the pair of heaters. In such a state, since the heaters and the metal plate are in contact with each other, the metal plate is pre-heated before pressing. The pre-heating time is, in order that the standard deviation of the areas compartmentalized by the warp yarns and the weft yarns is easily adjusted to be equal to or less than the upper limit value of the above-described range, preferably 30 seconds or longer, more preferably 60 seconds or longer, further preferably 120 seconds or longer. Further, the laminate may be held for 150 seconds or longer. The pre-heating time is, in order that the standard deviation of the areas compartmentalized by the warp yarns and the weft yarns is easily adjusted to be equal to or more than the lower limit value of the above-described range, preferably 600 seconds or shorter, more preferably 300 seconds or shorter, further preferably 240 seconds or shorter.

Further, in order that the standard deviation of the areas compartmentalized by the warp yarns and the weft yarns is easily adjusted to be within the above-described range, it is also preferred to employ the above pre-heating time while the requirement of the difference between the maximum membrane thickness and the minimum membrane thickness of the base material is satisfied.

The thermal press-bonding temperature is preferably 100°C to 200°C.

The properties of the woven fabric are as described above and the explanation of the woven fabric is omitted. The standard deviation of the areas compartmentalized by the warp yarns and the weft yarns of the woven fabric may be adjusted, for example by employing the preferred embodiment of the precursor membrane production method.

As the fluorinated polymer (I'), preferred is a polymer having units based on a fluorinated monomer having a group convertible to an ion exchange group (hereinafter also referred to as a "fluorinated monomer (I')"), more preferred is a polymer having units based on a fluorinated monomer having a group convertible to a sulfonic acid functional group (hereinafter also referred to as a "fluorinated monomer (S')") (hereinafter this polymer will also be referred to as a "fluorinated polymer (S')"), and particularly preferred is a copolymer of a fluorinated olefin and a monomer having a group convertible to a sulfonic acid functional group and a fluorine atom.

The fluorinated polymer (S') will be now described in detail below.

As a copolymerization method for production of the fluorinated polymer (S'), a known method such as solution polymerization, suspension polymerization or emulsion polymerization may be employed.

The fluorinated olefin can be any of those mentioned above, and is preferably TFE in terms of the monomer production cost, the reactivity with other monomers and the ability to give the fluorinated polymer (S) with excellent properties.

Single type of the fluorinated olefin may be used or two or more types may be used in combination.

The fluorinated monomer (S') may be a compound having at least one fluorine atom in the molecule, having an ethylenic double bond and having a group convertible to a sulfonic acid functional group.

As the fluorinated monomer (S'), a compound represented by the formula (2) is preferred in terms of the monomer production cost, the reactivity with other monomers and the ability to give the fluorinated polymer (S) with excellent properties.

Formula (2) CF₂=CF-L-(A)ₙ

In the formula (2), L and n are as defined above.

A is a group convertible to a sulfonic acid functional group. As the group convertible to a sulfonic acid functional group, preferred is a functional group that can be converted to a sulfonic acid functional group by hydrolysis. Specific examples of the group convertible to a sulfonic acid functional group include -SO₂F, -SO₂Cl and - SO₂Br. Two A groups may be the same or different.

As the compound represented by the formula (2), a compound represented by the formula (2-1), a compound represented by the formula (2-2), a compound represented by the formula (2-3) or a compound represented by the formula (2-4) is preferred.

Formula (2-1) CF₂=CF-O-R^{f1}-A

Formula (2-2) CF₂=CF-R^{f1}-A

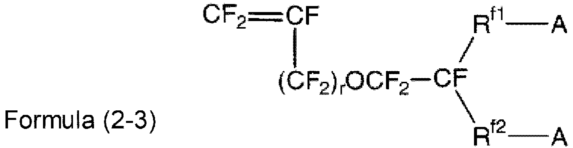

In the formulae, R^{f1}, R^{f2}, r and A are as defined above.

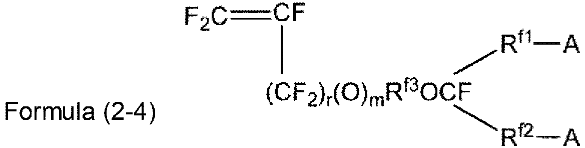

In the formula, R^{f1}, R^{f2}, R^{f3}, r, m and A are as defined above.

As the compound represented by the formula (2-1) and the compound represented by the formula (2-1), a compound represented by the formula (2-5) is preferred.

Formula (2-5) CF₂=CF-(CF₂)ₓ-(OCF₂CFY)_{y}-O-(CF₂)_{z}-SO₂F

In the formula, x, y, z and Y are as defined above.

Specific examples of the compound represented by the formula (2-1) include the following compounds where w is an integer of 1 to 8 and x is an integer of 1 to 5.

CF₂=CF-O-(CF₂)_{w}-SO₂F

CF₂=CF-O-CF₂CF(CF₃)-O-(CF₂)_{w}-SO₂F

CF₂=CF-[O-CF₂CF(CF₃)]ₓ-SO₂F

Specific examples of the compound represented by the formula (2-2) include the following compounds where w is an integer of 1 to 8.

CF₂=CF-(CF₂)_{w}-SO₂F

CF₂=CF-CF₂-O-(CF₂)_{w}-SO₂F

As the compound represented by the formula (2-3), a compound represented by the formula (2-3-1) is preferred.

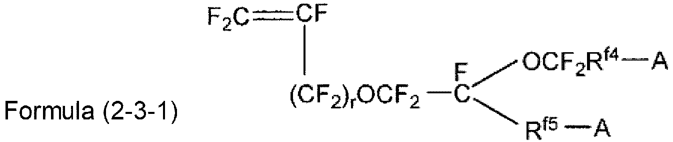

In the formula, R^{f4}, R^{f5}, r and A are as defined above.

Specific examples of the compound represented by the formula (2-3-1) include the following compounds.

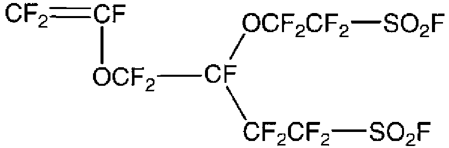

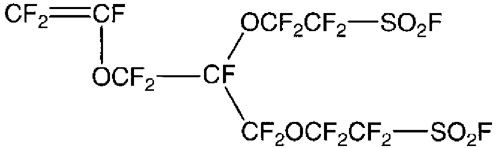

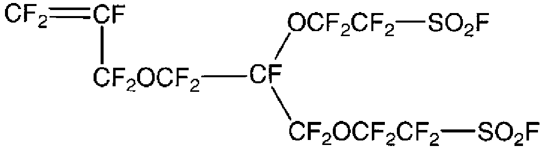

As the compound represented by the formula (2-4), a compound represented by the formula (2-4-1) is preferred.

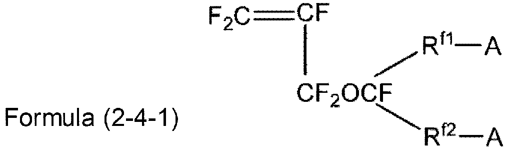

In the formula, R^{f1}, R^{f2} and A are as defined above.

Specific examples of the compound represented by the formula (2-4-1) include the following compound.

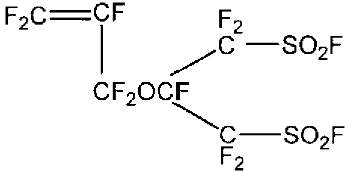

Single type of the fluorinated monomer (S') may be used or two or more types may be used in combination.

For production of the fluorinated polymer (S'), other monomer may be used in addition to the fluorinated olefin and the fluorinated monomer (S'). The other monomer can be any of those mentioned above.

The ion exchange capacity of the fluorinated polymer (I') can be adjusted by changing the content of groups convertible to ion exchange groups in the fluorinated polymer (I').

The conversion of groups convertible to ion exchange groups in the precursor membrane to ion exchange groups may be carried out by, for example, subjecting the precursor membrane to treatment such as hydrolysis and conversion to acid form.

In particular, preferred is contact treatment of the precursor membrane with an aqueous alkaline solution.

The contact treatment of the precursor membrane with the aqueous alkaline solution may be performed by, for example, immersion of the precursor membrane in the aqueous alkaline solution, spraying of the aqueous alkaline solution onto the surface of the precursor membrane, or the like.

The temperature of the aqueous alkaline solution is preferably 30 to 100°C, particularly preferably 40 to 100°C. The contact time of the precursor membrane and the aqueous alkaline solution is preferably 3 to 150 minutes, particularly preferably 5 to 50 minutes.

The aqueous alkaline solution preferably contains an alkali metal hydroxide, a water-soluble organic solvent and water.

The alkali metal hydroxide may be sodium hydroxide or potassium hydroxide.

In the present specification, the water-soluble organic solvent refers to an organic solvent easily soluble in water. Specifically, preferred is an organic solvent with a solubility of 0.1 g or more in 1000 mL of water (20°C), and an organic solvent with a solubility of 0.5 g or more is particularly preferred. The water-soluble organic solvent preferably contains at least one kind selected from the group consisting of aprotic organic solvents, alcohols and amino alcohols, and particularly preferably contains an aprotic organic solvent.

Single type of the water-soluble organic solvent may be used or two or more types may be used in combination.

Specific examples of the aprotic organic solvents include dimethyl sulfoxide, N,N-dimethylformamide, N,N-dimethylacetamide, N-methyl-2-pyrrolidone and N-ethyl-2-pyrrolidone. Preferred is dimethyl sulfoxide.

Specific examples of the alcohols include methanol, ethanol, isopropanol, butanol, methoxyethoxyethanol, butoxyethanol, butylcarbitol, hexyloxyethanol, octanol, 1-methoxy-2-propanol and ethylene glycol.

Specific examples of the amino alcohols include ethanolamine, N-methyl ethanolamine, N-ethyl ethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide in the aqueous alkaline solution is preferably 1 to 60 mass%, more preferably 3 to 55 mass%.

The content of the water-soluble organic solvent in the aqueous alkaline solution is preferably 1 to 60 mass%, particularly preferably 3 to 55 mass%.

The concentration of water in the aqueous alkaline solution is preferably 39 to 80 mass%.

After the contact treatment of the precursor membrane with the aqueous alkaline solution, any treatment for removing the aqueous alkaline solution may be performed. The aqueous alkaline solution may be removed by, for example, washing, with water, the precursor membrane contact-treated with the aqueous alkaline solution.

After the contact treatment of the precursor membrane with the aqueous alkaline solution, the thus-obtained membrane may be further treated by contact with an aqueous acidic solution to convert the ion exchange groups to acid form.

The contact treatment of the precursor membrane with the aqueous acidic solution may be performed by, for example, immersion of the precursor membrane in the aqueous acidic solution or spraying of the aqueous acidic solution onto the surface of the precursor membrane.

The aqueous acidic solution preferably contains an acid component and water.

Specific examples of the acid component include hydrochloric acid and sulfuric acid.

### <Membrane electrode assembly>

The membrane electrode assembly of the present disclosure contains an anode having a catalyst layer, a cathode having a catalyst layer, and a polymer electrolyte membrane provided between the anode and the cathode.

The electrolyte membrane is as described above and its description is omitted.

Fig. 4 is a cross-sectional view illustrating an example of the membrane electrode assembly of the present disclosure. A membrane electrode assembly 20 includes an anode 22 with a catalyst layer 26 and a gas diffusion layer 28, a cathode 24 with a catalyst layer 26 and a gas diffusion layer 28, and an electrolyte membrane 10 disposed between the anode 22 and the cathode 24 in contact with the respective catalyst layers 26.

### [Anode and cathode]

Each of the anode and the cathode has a catalyst layer. In the example of Fig. 4, each of the anode 22 and the cathode 24 has a catalyst layer 26 and a gas diffusion layer 28.

In at least one of the anode 22 and the cathode 24, there may be a region in which the gas diffusion layer 28 and the catalyst layer 26 partially overlap in the thickness direction. Further, in at least one of the anode 22 and the cathode 24, the catalyst layer 26 may be omitted and the gas diffusion layer 28 functions as the catalyst layer 26.

The catalyst layer may be, for example, a layer containing a catalyst and a polymer having ion exchange groups.

Specific examples of the catalyst include: a supported catalyst having platinum, a platinum alloy or a platinum-based core-shell catalytic material supported on a carbon carrier; a ruthenium oxide catalyst; an iridium oxide catalyst; a composite oxide containing ruthenium; a composite oxide containing iridium; a ruthenium oxide-based core-shell catalytic material; and an iridium oxide-based core-shell catalytic material. As the carbon carrier, a carbon black powder may be mentioned.

As the polymer having ion exchange groups, a fluorinated polymer having ion exchange groups may be mentioned.

The catalyst contained in the catalyst layer of the anode side is preferably at least one catalyst selected from the group consisting of a ruthenium oxide catalyst, an iridium oxide catalyst, a composite oxide containing ruthenium, a composite oxide containing iridium, a ruthenium oxide-based core-shell catalytic material, and an iridium oxide-based core-shell catalytic material.

The catalyst contained in the catalyst layer of the cathode side is preferably the above supported catalyst.

The gas diffusion layer functions to uniformly diffuse gas to the catalyst layer, and also functions as a current collector. For example, the gas diffusion layer can be in the form of a carbon paper, a carbon cloth, a carbon felt, a metal mesh, or the like.

It is preferred to use a metal mesh as the gas diffusion layer on the anode side. The metal mesh is constituted preferably by a highly anti-corrosive metal, such as titanium, zirconium, niobium or tantalum, and titanium is preferred.

The gas diffusion layer may be made water repellent by applying PTFE or the like. In the case where the gas diffusion layer is the metal mesh, its surface may be coated with a noble metal such as platinum.

Although the membrane electrode assembly of Fig. 4 has gas diffusion layers 28, the gas diffusion layers are optional, and the membrane electrode assembly may have no gas diffusion layers.

Further, as described above, the gas diffusion layer may contain the above-described catalyst.

The membrane thicknesses of the anode and the cathode are each independently preferably 5 to 100 µm, more preferably 5 to 50 µm, further preferably 5 to 30 µm, particularly preferably 5 to 15 µm, with a view to obtaining more excellent effects of the present disclosure.

Each of the membrane thicknesses of the anode and the cathode is an arithmetic mean of thickness measurements at arbitrary 20 points on the cross-sectional image cut in a plane in parallel with the thickness direction, of the membrane electrode assembly, observed by an optical microscope.

### [Membrane electrode assembly production method]

A membrane electrode assembly production method may be, for example, a method of forming catalyst layers on the electrolyte membrane and further sandwiching the obtained laminate between gas diffusion layers, or a method of forming a catalyst layer on a gas diffusion layer to form electrodes (an anode and a cathode), and sandwiching the electrolyte membrane between the electrodes.

As a catalyst layer production method, a method may be mentioned in which a catalyst layer forming ink is applied to a predetermined position of the electrolyte membrane and dried if required. A method may also be mentioned in which a catalyst layer forming ink is applied to a base material and dried, and the formed catalyst layer is transferred to the electrolyte membrane. The catalyst layer forming ink may be a liquid having the polymer having ion exchange groups and the catalyst dispersed in a dispersion medium.

### <Application>

The membrane electrode assembly of the present disclosure is applicable to a water electrolyzer (specifically a polymer electrolyte membrane water electrolyzer). Further, the membrane electrode assembly of the present disclosure is applicable to an electrolytic hydrogenation apparatus for an aromatic compound (such as toluene).

### [Water electrolyzer]

The water electrolyzer of the present disclosure contains the above-described membrane electrode assembly. In the water electrolyzer of the present disclosure, which contains the above-described membrane electrode assembly (the electrolyte membrane of the present disclosure), the electrolyte membrane is less likely to have pinholes.

The water electrolyzer of the present disclosure may have the same configuration as a known water electrolyzer except that it contains the above-described membrane electrode assembly.

### [Hydrogen production method]

The hydrogen production method of the present disclosure is a method comprising electrolyzing water (electrolytic solution) using the above-described water electrolyzer to produce hydrogen. It is considered that according to the hydrogen production method of the present disclosure, which employs the water electrolyzer of the present disclosure, hydrogen can be produced efficiently.

### [Electrolytic hydrogenation apparatus]

The electrolytic hydrogenation apparatus of the present disclosure contains the membrane electrode assembly. The electrolytic hydrogenation apparatus of the present disclosure may have the same configuration as a known electrolytic hydrogenation apparatus except that it contains the above-described membrane electrode assembly.

### EXAMPLES

Now, the present invention will be described in further detail with reference to Examples. Ex. 1 to 5 correspond to Examples of the present invention, and Ex. 6 to 10 correspond to Comparative Examples. It should be understood that the present invention is by no means restricted thereto.

### <Measurement methods>

Methods for measuring values in Ex. will be described.

### [Ion exchange capacity of fluorinated polymer]

The weight of a fluorinated polymer was measured, after 24 hours of incubation in a glove box purged with dry nitrogen, as the dry mass of the fluorinated polymer. Then, the fluorinated polymer was immersed in a 2 mol/L aqueous sodium chloride solution at 60°C for 1 hour. After the fluorinated polymer was washed with ultrapure water and recovered, the solution in which the fluorinated polymer had been immersed was titrated with 0.1 mol/L aqueous sodium hydroxide solution to determine the ion exchange capacity X (meq/g dry resin, represented as meq/g in Table 1 below) of the fluorinated polymer.

### [Fabric weight of woven fabric]

The woven fabric whole cloth used was cut into a size of 20×20 cm, and the mass was measured. The measurement was conducted five times, and the fabric weight (g/m²) of the woven fabric was obtained from the average value of the measurement of five times.

### [Densities of warp yarns and weft yarns constituting woven fabric]

The densities of the warp yarns and the weft yarns constituting the woven fabric were calculated by the following method. From an image taken by an optical microscope, the lengths constituting ten yarns were measured five times for each of the warp yarns and the weft yarns, and the average was converted into the density (yarns/inch).

### [Aperture ratio of woven fabric]

The woven fabric whole cloth used was cut into samples of a size of 20×20 cm, and using the samples, the aperture ratio was calculated based on the method in the above description of the woven fabric.

### [Area compartmentalized by warp yarns and weft yarns]

The standard deviation of the areas compartmentalized by the warp yarns and the weft yarns, and the average value of the areas compartmentalized by the warp yarns and the weft yarns, were calculated by the above-described methods.

### <Ex. 1>

The electrolyte membrane used in Ex. 1 was obtained by the following method.

### [Production of fluorinated polymer (S'-1)]

CF₂=CF₂ and monomer (X) represented by the following formula (X) were copolymerized to obtain fluorinated polymer (S'-1) (ion exchange capacity: 1.25 meq/g dry resin).

CF₂=CF-O-CF₂CF(CF₃)-O-CF₂CF₂-SO₂F ··· (X)

The ion exchange capacity in the above [Production of fluorinated polymer (S'-1)] refers to an ion exchange capacity of a fluorinated polymer obtained by hydrolysis of the fluorinated polymer (S'-1) by the procedure described below.

### [Production of film-provided base material Y1]

To a base material of linear low density polyethylene (LLDPE) film (melting point: 110 to 120°C), the fluorinated polymer (S'-1) was attached by melt-extrusion to obtain film-provided base material Y1 having provided on the base material film α1 (membrane thickness: 45 µm) formed of the fluorinated polymer (S'-1).

The difference between the maximum membrane thickness and the minimum membrane thickness of the base material was 10 µm. The membrane thickness was measured by a contact membrane thickness meter (thickness gauge, SMD-565J-L, manufactured by TECLOCK Co., Ltd.) at 20 points.

### [Production of woven fabric]

Using 18.6-denier yarns of PFA as warp yarns and weft yarns, woven fabric A1 was produced by plain weaving such that the density of the PFA yarns was 100 yarns/inch. The fabric weight of the woven fabric A1 was 16.3 g/m², and the aperture ratio was 74%.

### [Production of electrolyte membrane]

The film-provided base material Y1, the woven fabric A1 and the film-provided base material Y1 were stacked in this order to obtain a laminate. The film-provided base materials Y1 were arranged so that the film α1 in each film-provided base material Y1 was in contact with the woven fabric A1.

The laminate was thermally press-bonded by a flat press machine at a temperature of 160°C and a surface pressure of 30 MPa/m² for 10 minutes, and then, the base films on both sides were peeled off at a temperature of 50°C to obtain a precursor membrane.

The pre-heating time before the thermal press-bonding (hot pressing) was 120 seconds.

The precursor membrane was immersed in a solution of dimethyl sulfoxide/potassium hydroxide/water = 30/5.5/64.5 (mass ratio) at 95°C for 30 minutes to convert groups convertible to sulfonic acid functional groups in the precursor membrane by hydrolysis to K-form sulfonic acid functional groups, and washed with water. The thus-obtained membrane was immersed in 1M sulfuric acid to convert the terminal groups from K-form to H-form, and dried to obtain electrolyte membrane.

### [Production of membrane electrode assembly]

A polymer (ion exchange capacity: 1.10 meq/g dry resin) produced by copolymerization of TFE and the above-mentioned monomer (X), followed by conversion to acid form through hydrolysis and acid treatment, was dispersed in a solvent of water/ethanol in a ratio of 40/60 (mass%) to obtain a dispersion with a solid content of 25.8% (hereinafter also referred to as a "dispersion X"). To the obtained dispersion X (19.0 g), ethanol (0.52 g) and water (3.34 g) were added, and an iridium oxide catalyst (13.0 g) (manufactured by TANAKA PRECIOUS METAL TECHNOLOGIES Co., Ltd.) containing 76 mass% iridium was further added. The obtained mixture was processed in a planetary bead mill (rotation speed: 300 rpm) for 30 minutes, water (4.49 g) and ethanol (4.53 g) were added, and the mixture was further processed in the planetary bead mill (rotation speed: 200 rpm) for 60 minutes to obtain an anode catalyst ink with a solid content of 40 mass%.

The anode catalyst ink was applied to one surface of the electrolyte membrane obtained by the above procedure, by a bar coater such that the amount of iridium applied was 2.0 mg/cm², dried at 80°C for 10 minutes and heat-treated at 150°C for 15 minutes, thereby obtaining an anode catalyst layer-provided electrolyte membrane.

A supported catalyst having 46 mass% platinum supported on a carbon powder ("TEC10E50E" manufactured by TANAKA PRECIOUS METAL TECHNOLOGIES Co., Ltd.) (11 g) was mixed and milled with water (59.4 g) and ethanol (39.6 g) in an ultrasonic homogenizer to obtain a catalyst dispersion.

To the catalyst dispersion, a previously prepared mixture (29.2 g) of the dispersion X (20.1 g), ethanol (11 g) and ZEORORA H (manufactured by Zeon Corporation) (6.3 g) was added. Further, water (3.66 g) and ethanol (7.63 g) were added to the dispersion. The obtained dispersion was mixed in a paint conditioner for 60 minutes to obtain a cathode catalyst ink with a solid content of 10.0 mass%.

The cathode catalyst ink was applied by a die coater to an ETFE sheet, dried at 80°C and heat-treated at 150°C for 15 minutes, thereby obtaining a cathode catalyst layer decal with a platinum content of 0.4 mg/cm².

The side on which no anode catalyst layer was formed of the anode catalyst layer-provided electrolyte membrane, and the side on which the catalyst layer was formed of the cathode catalyst layer decal, were arranged to face each other, and the anode catalyst layer-provided electrolyte membrane and the cathode catalyst layer were laminated together by hot pressing for 2 minutes at a press temperature of 150°C and a pressure of 3 MPa. After cooling to 70°C and releasing the pressure, the resulting laminate was taken out, and the ETFE sheet of the cathode catalyst layer decal was peeled off to obtain a membrane electrode assembly having an electrode area of 25 cm².

### [Electrolysis test]

The membrane electrode assembly obtained by the above procedure was heat-treated at 150°C for 15 minutes and set in a water electrolysis evaluation jig EH50-25 (manufactured by Greenlight Innovation).

To fully hydrate the electrolyte membrane and ionomers in the electrodes, pure water at 80°C and ordinary pressure with an electrical conductivity of 1.0 µS/cm or less was supplied to both the anode side and the cathode side at a flow rate of 50 mL/min for 12 hours. Then, the cathode side was purged with nitrogen.

After the nitrogen purge, the evaluation jig with the membrane electrode assembly was operated by a direct current power source PWR1600L manufactured by Kikusui Electronics Corporation by increasing the electric current by 2.5 A in a stepwise manner from 0 to 50 A (current density from 0 to 2 A/cm²) and then applying an electric current of 50 A (current density of 2 A/cm²) for 300 hours by supplying pure water at 80°C and ordinary pressure with an electrical conductivity of 1.0 µS/cm or less to the anode side at a flow rate of 50 mL/min and keeping the pressure of gas generated from the cathode side at 1 MPa.

After the electrolysis test, the membrane electrode assembly was taken out from the water electrolysis evaluation jig, and the number of pinholes (perforations) in the electrolyte membrane of the membrane electrode assembly was counted by a pinhole detector (model "TRS-70", manufactured by Sanko Electronic Laboratory Co., Ltd.).

Based on the results, the degree of difficulty of pinhole generation was evaluated based on the following standards. The grade A, B or C is preferred.
A: No pinholes
B: One or two pinholes
C: Three or four pinholes
D: Five or more pinholes

### [Tensile test]

The electrolyte membrane obtained by the above procedure was subjected to tensile test by the following procedure.

Tear strength was obtained by using a dumbbell test specimen as specified by JIS K 7127:1999 (test specimen type 1B, width of narrow portion: 10 mm, gauge length: 50 mm). This tear strength is taken as σ1. At the midpoint in the length direction between gauge marks, a cut of 1 mm in width direction was formed, and then tear strength was obtained in the same manner. This tear strength is taken as σ2.

From the ratio of σ2 to σ1 (σ2/σ1), the tear resistance of the electrolyte membrane was evaluated based on the following standards. The higher ratio indicates higher resistance. The grade A, B or C is preferred.
A: The above ratio being 0.6 or higher
B: The above ratio being 0.5 or higher and less than 0.6
C: The above ratio being 0.4 or higher and less than 0.5
D: The above ratio being less than 0.4

### <Ex. 2 to 9>

An electrolyte membrane was prepared in the same manner as in Ex. 1 and measurements and evaluations were conducted in the same manner as in Ex. 1 except that the type of the base material used for production of the film-provided base material was changed to the base material as identified in the following Table 1 and that the pre-heating time before the thermal press-bonding was changed as identified in the following Table 1.

It is confirmed that in Ex. 6, in a case where an electrolyte membrane is produced without pre-heating, in the above electrolysis evaluation test, no pinhole was observed when the pressure of the gas generated from the cathode side was atmospheric pressure, whereas in the same electrolysis evaluation test, pinholes are formed when the pressure of the gas generated from the cathode side was 1 MPa.

### <Results>

The conditions for preparation of the electrolyte membrane, and results of the measurement and evaluation of the obtained electrolyte membrane are shown in Table 1.

**Table 1**

| | Production conditions | | Areas compartmentalized by warp yarns and weft yarns | | Evaluation results | |
|---|---|---|---|---|---|---|
| | Base material maximum membrane thickness difference [µm] | Pre-heating time [sec] | Standard deviation ×10⁴ [µm²] | Average value ×10⁴ [µm²] | Electrolysis test | Tensile test |
| Ex. 1 | 10 | 120 | 0.33 | 5.8 | A | A |
| Ex. 2 | 5 | 120 | 0.10 | 5.8 | A | C |
| Ex. 3 | 30 | 300 | 2.00 | 5.8 | C | A |
| Ex. 4 | 5 | 60 | 0.20 | 5.8 | A | B |
| Ex. 5 | 20 | 180 | 1.00 | 5.8 | B | A |
| Ex. 6 | 1 | 150 | 0.05 | 5.8 | A | D |
| Ex. 7 | 35 | 20 | 3.40 | 5.3 | D | A |
| Ex. 8 | 5 | 650 | 0.06 | 5.8 | A | D |
| Ex. 9 | 25 | 20 | 3.60 | 5.2 | D | A |

It was found from the results shown in Table 1 that the electrolyte membranes in Ex. 6 and 8 in which the standard deviation of the areas of regions compartmentalized by the warp yarns and the weft yarns was less than 0.10×10⁴ µm², were likely to be torn, and that the electrolyte membranes in Ex. 7 and 9 in which the standard deviation was more than 2.0×10⁴ µm², were likely to have pinholes.

Whereas the electrolyte membranes in Ex. 1 to 5 in which the standard deviation was within the predetermined range, were confirmed to be less likely to have pinholes and to be less likely to be torn.

It was confirmed from the comparison between Ex. 2 and Ex. 1 and 4 that the electrolyte membrane was further less likely to be torn when the standard deviation was 0.15×10⁴ µm² or more (more preferably 0.20×10⁴ µm² or more, further preferably 0.30×10⁴ µm² or more).

It was confirmed from the comparison between Ex. 3 and Ex. 5 and 1 that the electrolyte membrane was further less likely to have pinholes when the standard deviation was 1.5×10⁴ µm² or less (more preferably 1.0×10⁴ µm² or less, further preferably 0.50×10⁴ µm² or less).

The entire disclosure of Japanese Patent Application No. 2023-221084 filed on December 27, 2023 including specification, claims, drawings and summary is incorporated herein by reference in its entirety.

### REFERENCE SYMBOLS

- 10:: polymer electrolyte membrane
- 12:: electrolyte
- 14:: woven fabric
- 16, V1, V2, V3, V4:: warp yarns
- 18, H1, H2, H3, H4:: weft yarns
- 20:: membrane electrode assembly
- 22:: anode
- 24:: cathode
- 26:: catalyst layer
- 28:: gas diffusion layer

## Claims

1. A polymer electrolyte membrane comprising a fluorinated polymer having ion exchange groups, and a woven fabric constituted by warp yarns and weft yarns,
wherein the standard deviation of the areas of regions compartmentalized by the warp yarns and the weft yarns, is 0.10×10⁴ to 2.0×10⁴ µm², as observed from a normal direction to the surface of the polymer electrolyte membrane.

2. The polymer electrolyte membrane according to Claim 1, wherein the denier count of the warp yarns and the denier count of the weft yarns are each independently 15 to 50.

3. The polymer electrolyte membrane according to Claim 1, wherein the average value of the areas of the regions compartmentalized by the warp yarns and the weft yarns is 1.0×10⁴ to 10.0×10⁴ µm².

4. The polymer electrolyte membrane according to Claim 1, wherein the standard deviation of the areas of the regions compartmentalized by the warp yarns and the weft yarns is 0.30×10⁴ to 1.0×10⁴ µm².

5. The polymer electrolyte membrane according to Claim 1, wherein the density of the warp yarns and the density of the weft yarns are each independently 70 to 150 yarns/inch.

6. The polymer electrolyte membrane according to Claim 1, wherein the warp yarns and the weft yarns are each independently made of a material selected from the group consisting of a polytetrafluoroethylene, a tetrafluoroethylene/perfluoroalkyl vinyl ether copolymer, a polyether ether ketone and a polyphenylene sulfide.

7. The polymer electrolyte membrane according to Claim 1, wherein the ion exchange groups are sulfonic acid functional groups.

8. The polymer electrolyte membrane according to Claim 1, wherein the ion exchange capacity of the fluorinated polymer is 0.90 to 2.00 meq/g dry resin.

9. The polymer electrolyte membrane according to Claim 1, wherein the fluorinated polymer has units based on a fluorinated olefin and units having a sulfonic acid functional group and a fluorine atom.

10. The polymer electrolyte membrane according to Claim 9, wherein the fluorinated olefin is a C₂₋₃ fluoroolefin having one or more fluorine atoms in its molecule.

11. The polymer electrolyte membrane according to Claim 9, wherein the units having a sulfonic acid functional group and a fluorine atom are units represented by the formula (1):
formula (1) -[CF₂-CF(-L-(SO₃M)ₙ)]-
wherein L is a (n+1)-valent perfluorohydrocarbon group which may contain an etheric oxygen atom, M is a hydrogen atom, an alkali metal or a quaternary ammonium cation, n is 1 or 2, and the plurality of M may be the same or different.

12. A membrane electrode assembly for a water electrolyzer, which comprises an anode having a catalyst layer, a cathode having a catalyst layer, and the polymer electrolyte membrane as defined in Claim 1 or 2 provided between the anode and the cathode.

13. A water electrolyzer, which comprises the membrane electrode assembly as defined in Claim 12.

14. A hydrogen production method, which comprises electrolyzing water by the water electrolyzer as defined in Claim 13 to produce hydrogen.

15. A method for producing the polymer electrolyte membrane as defined in any one of Claims 1 to 11, which comprises thermally press-bonding a laminate containing the following (a), (b) and (c) in this order, (b) and (c) being in contact with each other, by a thermal press-bonding apparatus pre-heated at the thermal press-bonding temperature for 30 to 600 seconds, peeling the (a) to obtain a precursor membrane, and converting groups convertible to ion exchange groups in the precursor membrane to ion exchange groups to obtain the polymer electrolyte membrane:
(a) a base material of which the difference between the maximum membrane thickness and the minimum membrane thickness is 5 to 30 µm;
(b) a film made of a fluorinated polymer having groups convertible to ion exchange groups; and
(c) a woven fabric constituted by warp yarns and weft yarns.
